(19) Europäisches Patentamt

European Patent Office

Office européen des brevets

(11) **EP 0 419 195 B1**

(12) **EUROPEAN PATENT SPECIFICATION**

(45) Date of publication and mention
of the grant of the patent:
**03.01.1996 Bulletin 1996/01**

(51) Int Cl.⁶: **G11B 15/675**

(21) Application number: **90310174.9**

(22) Date of filing: **18.09.1990**

(54) **Cassette holder for tape player**

Kassettenbehälter für Bandwiedergabegerät

Support de cassette pour lecteur à bande

(84) Designated Contracting States:
**AT DE FR GB IT NL**

(30) Priority: **20.09.1989 JP 243878/89**

(43) Date of publication of application:
**27.03.1991 Bulletin 1991/13**

(73) Proprietor: **SONY CORPORATION**
**Tokyo 141 (JP)**

(72) Inventors:
• **Emori, Masashi, c/o Patents Division**
**Shinagawa-ku, Tokyo 141 (JP)**
• **Ohyama, Masao, c/o Patents Division**
**Shinagawa-ku, Tokyo 141 (JP)**

(74) Representative:
**Purvis, William Michael Cameron et al**
**London EC4A 1DA (GB)**

(56) References cited:
EP-A- 0 286 751          GB-A- 2 173 170
US-A- 4 803 575

• PATENT ABSTRACTS OF JAPAN vol. 12, no. 29
(P-660)(2876) 28 January 1988, & JP-A- 62
180556 (MATSUSHITA ELECTRIC IND. CO.
LTD.) 07 August 1987,
• PATENT ABSTRACTS OF JAPAN vol. 12, no. 29
(P-660)(2876) 28 January 1988, & JP-A- 62
180554 (MATSUSHITA ELECTRIC IND. CO.
LTD.) 07 August 1987,

## Description

The invention relates to a tape cassette player having a cassette holder containing a cassette having a recording medium tape housed in a cassette casing, on which tape information can be recorded and from which tape information can be reproduced, the cassette having a cassette casing with a sliding shutter openable to close a lower side tape access opening defined at the lower side of the cassette casing. The cassette may be a digital audio tape (DAT) cassette.

Patent Specification US-A-4,683,510 discloses one typical construction of DAT cassette which has a sliding shutter which can be locked at an open position and a closed position. The sliding shutter is locked respectively at the open and closed positions by means of a locking head integrally formed with a resiliently deformable locking arm or locking claw.

Patent Specification GB-A-2,173,170 discloses a DAT cassette which has a symmetric groove construction with a pair of grooves formed on the lower surface of the sliding shutter. A shutter locking claw projects into each of the grooves. Symmetric grooves are intended to provide stable shutter handling operation upon sliding the shutter between the closed position which blocks access to the tape through the lower opening of the cassette casing and the open position which permits access to the tape. Furthermore, the symmetric groove constructions on the lower side face of the shutter may enhance the appearance of the DAT cassette in comparison with a single groove construction. Each shutter locking claw can be disengaged from the shutter by a respective projection on a bottom plate of a cassette holder of a cassette player, which projections project into the grooves and have tapered front and rear ends.

In general, tape cassette players are required accurately to position an associated tape cassette at a loading position. Various constructions of cassette positioning means have been provided for cassette holders of tape cassette players to accomplish accurate positioning of the tape cassette. Such cassette positioning means has to restrict movement of the tape cassette in the back and forth direction and a direction transverse thereto. Typically, the cassette holder is provided with a resilient member to depress the tape cassette onto a bottom plate of the cassette holder to prevent play motion of the cassette within the cassette holder. Also, the cassette holder may be provided with a projection to restrict movement of the tape cassette in the back and forth direction and guide members to restrict tape cassette movement in the transverse direction.

Such cassette positioning means necessarily increase the number of parts required to form a cassette holder and thus make the structure of the cassette holder complicated.

According to the invention there is provided a tape cassette player having a cassette holder containing a cassette having a recording medium tape housed in a cassette casing, on which tape information can be recorded and from which tape information can be reproduced, the cassette casing having a sliding shutter openable to close a tape access opening defined at the lower side of the cassette casing,

wherein the cassette holder defines therein a tape cassette receptacle space, the cassette holder having a bottom plate forming the bottom of the cassette receptacle space; and
the cassette holder has two projections projecting from the bottom plate of the cassette holder and oriented in mutually spaced apart relationship to each other, the projections being engageable each with a respective groove of two grooves in the sliding shutter, into which grooves project locking heads for locking the sliding shutter at an open position or a closed position,
characterised in that one of the pairs formed by one of the projections and one of the grooves are differentiated in width from the other of the pairs in such a manner that said one of the grooves and that one of the projections engaging therein are substantially in width conformance with each other while the other of the pairs formed by the other groove, and the other projection has the other projection provided of narrower width than the width of the other groove such that they are engaged with each other only loosely.

Such a tape player can accurately position a tape cassette without requiring separately formed positioning means.

Preferably, the other projection is provided of narrower width than the other groove. Preferably, the width of the other projection is approximately half of the width of the other groove.

The invention is diagrammatically illustrated by way of example in the accompanying drawings, in which:

Figure 1 is a plan view of one embodiment of a cassette holder for a tape player according to the invention;
Figure 2 is a section taken on line II - II in Figure 1;
Figure 3 is a section taken on line III - III in Figure 1;
Figure 4 is a perspective view of a major part of the cassette holder of Figure 1;
Figures 5(A) and 5(B) are sections taken on line v - v of Figure 1;
Figure 6 is a perspective view of a tape cassette to be received by a cassette player of the invention;
Figure 7 is a perspective view of the tape cassette of Figure 6, but seen from the bottom side; and
Figure 8 is a similar perspective view to Figure 7 but showing the state wherein a pivotal lid and sliding shutter are placed at open positions.

Referring to the drawings, the illustrated embodiment of cassette holder is provided in a tape player for a DAT cassette or equivalent type tape cassette which has a sliding shutter with twin and essentially symmetric grooves (hereafter referred to as "tape cassette") which tape player is generally represented by the reference numeral 1. In advance of discussion of the preferred embodiment of cassette holder, construction of a DAT cassette will be discussed briefly in order to facilitate understanding.

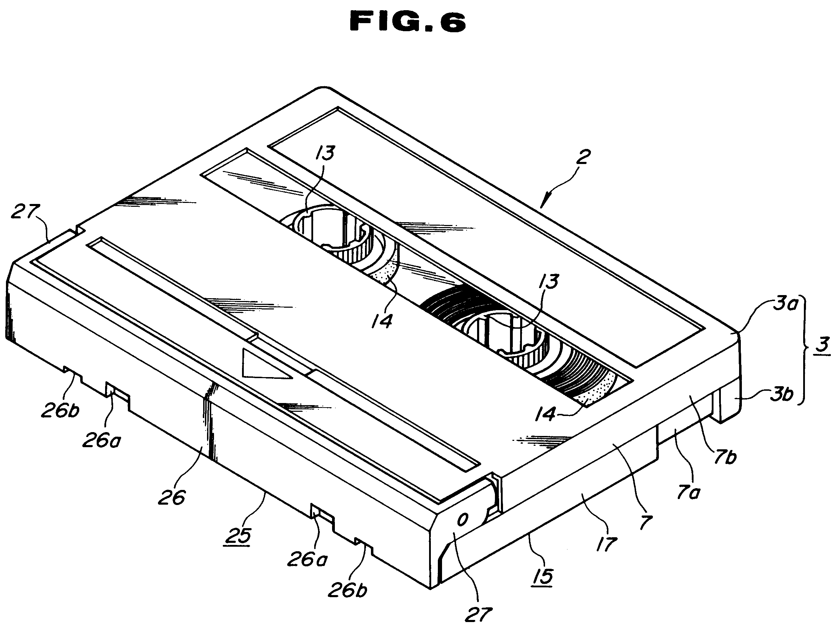

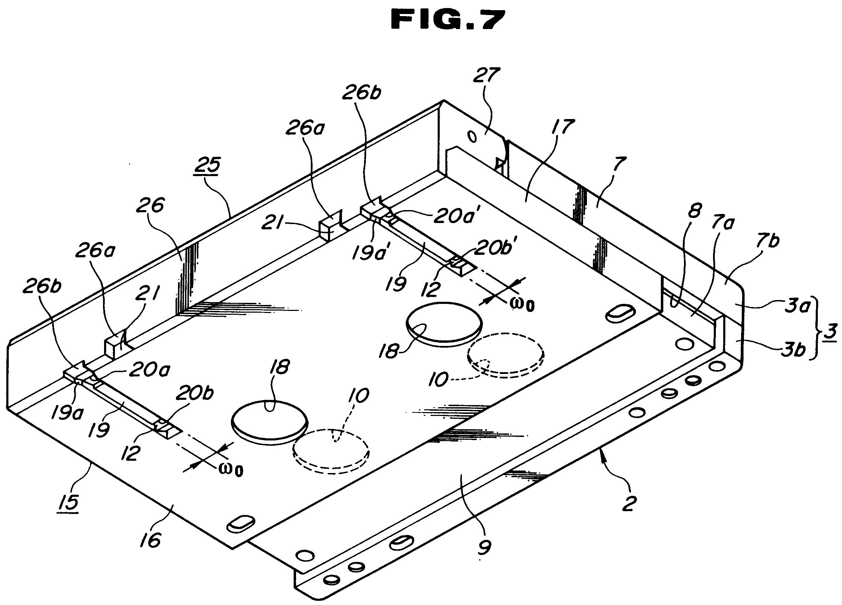

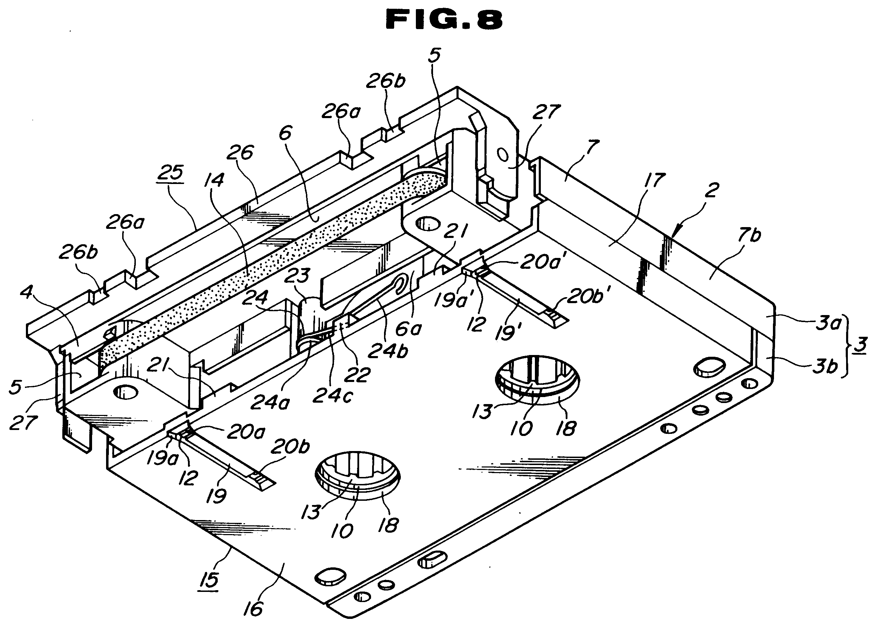

With particular reference to Figures 6 to 8, a tape cassette 2 has a cassette casing 3 made of synthetic resin and constituted by an upper half 3a and a lower half 3b. The cassette casing 3 has a front wall 4 having a pair of tape path openings 5. A lower end and front end clearance 6 is formed in front on the front wall 4. A tape 14 passes across this clearance 6. Side walls 7a of the lower half 3b have outer surfaces slightly inwardly offset from the outer surfaces of the side walls 7b of the upper half 3a. which side walls 7b and 7a of the upper and lower halves 3a and 3b form a side wall 7 of the cassette casing 3. At the outer edge portion of the side walls 7b and 7a, thin guide grooves 8 (only one is shown) are defined.

A bottom plate 9 of the cassette casing 3 is formed with a pair of reel base receptacle openings 10. Locking claws 11 are also formed with the bottom plate 9. Tape reels 13 are provided at corresponding orientations to the reel base receptacle openings 10 to receive a reel base. The locking claws 11 are provided with essentially V-shaped or U-shaped locking heads 12 which are designed to project from the lower surface of the bottom plate 9.

Opposing the bottom plate 9, a sliding shutter 15 is provided, which is made of synthetic resin. The sliding shutter 15 is designed to extend over the major part of the bottom of the tape cassette 2 to close the lower end opening of the clearance 6 and to close the reel base receptacle openings 10 at an initial, or unloaded position. The sliding shutter 15 has a major flat section 16 oriented in parallel relationship with the bottom plate 9 and side plates 17 extending perpendicular to the major flat section 16 from both transverse edges thereof. Free edges 17a of the side plates 17 are bent into sliding engagement with the guide grooves 8 in the side walls 7 of the cassette casing 3. The outer surface of each side plate 17 is so designed as to form a flush surface with the respective outer surface of the side wall 7b of the upper half 3a.

A pair of essentially circular holes 18 is formed through the sliding shutter 15. The holes 18 are oriented to be placed at offset positions to the reel base receptacle openings 10 at the initial position and to be aligned with the reel base receptacle openings 10 when the sliding shutter 15 is slidingly shifted to an open position. Also, the flat section 16 of the sliding shutter 15 is formed with a pair of parallel locking head receptacle grooves 19 and 19' extending in the back and forth direction. The locking head receptacle grooves 19 and 19' extend to the front end of the flat section 16 to open to a front end 19a and 19a' where the side edges taper in a direction away from each other to provide a wider path. Locking holes 20a, 20b, and 20a' and 20b' open into the locking head receptacle grooves 19 and 19'. The locking holes 20a and 20a' are oriented in the vicinity of the front end edge 19a and 19a' and the locking holes 20b and 20b' are oriented in the vicinity of the rear end of the grooves 19 and 19'. The depth of the locking head receptacle grooves 19 and 19' is so designed as to receive therein the locking heads 12 of the locking claws 11 extending through one of the locking holes 20a, 20a' or 20b, 20b'. Thus, at the initial position of the sliding shutter 15, the locking heads 12 engage with the locking holes 20b and 20b' to lock the sliding shutter at the initial position, and at the open position of the sliding shutter, the locking heads 12 engage with the locking holes 20a and 20a'.

The sliding shutter 15 is provided with a pair of thin projections 21 extending upwardly from the front edge of the flat section 16. The thin projections 21 are oriented at transversely and inwardly offset positions relative to the front edges 19a and 19a' of the locking head receptacle grooves 19 and 19'. A spring stop 22 is also formed at the front edge portion of the flat section 16 of the sliding shutter 15. The spring stop 22 receives one end 24c of a torsional coil spring 24 which has a coil section 24a wound around a spring rest pin 23. The spring 24 has another end 24b abutting the front surface of the front wall 4 of the cassette casing 3. With the illustrated construction, the sliding shutter 15 is normally biased toward the initial position by means of the torsional coil spring 24.

The tape cassette 2 is further provided with a front end closing pivotal lid 25. The pivotal lid 25 has a front end plate 26 and pivot arms 27. The front end plate 26 is oriented in parallel to the front wall 4 of the cassette casing at the initial position to close the front end opening of the clearance 6. The pivot arms 27 are oriented in parallel relationship with the front end portion of the side walls 7 to be pivotally supported thereon. The pivotal lid 25 thus constructed is designed to be locked at the initial position and the opened position with a known construction of locking mechanism (not shown). The locking mechanism of the pivotal lid 25 co-operates with the sliding shutter 15 to establish mutual associated interlocking at the initial position.

The front end plate 26 of the pivotal lid 25 is formed with a pair of wide cut-outs 26a and a pair of narrow cut-outs 26b. The wide cut-outs 26a are oriented at transverse positions corresponding to the projections 21 of the sliding shutter 15. Likewise, the narrow grooves 26b are oriented at the transverse position corresponding to the front edges 19a and 19a' of the locking head receptacle grooves 19 and 19'.

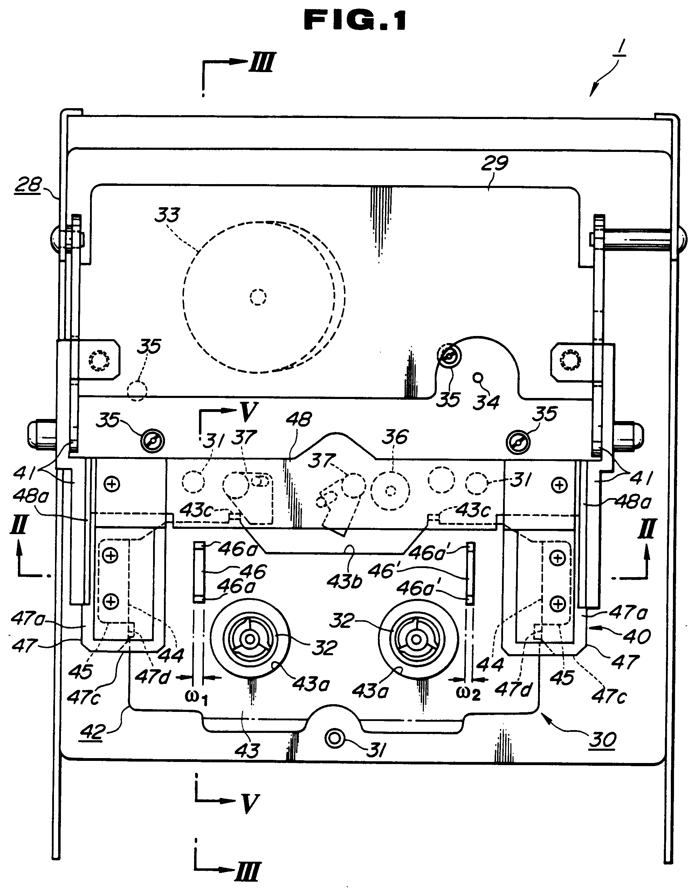

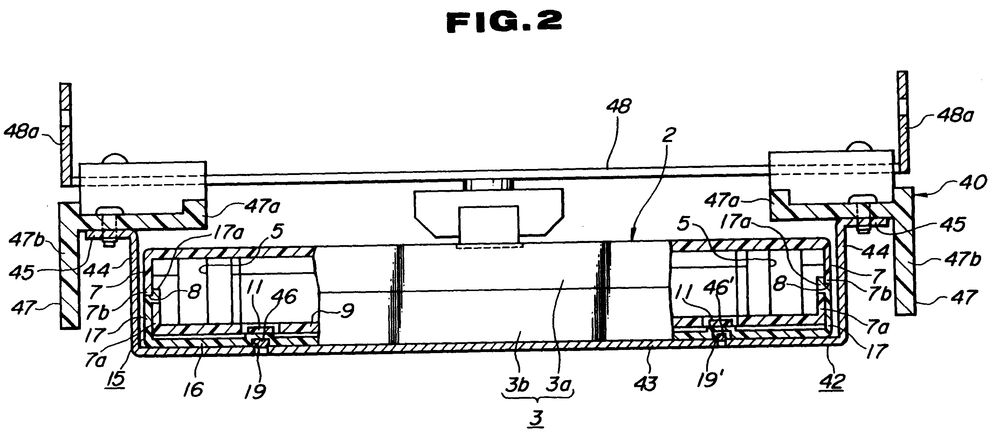

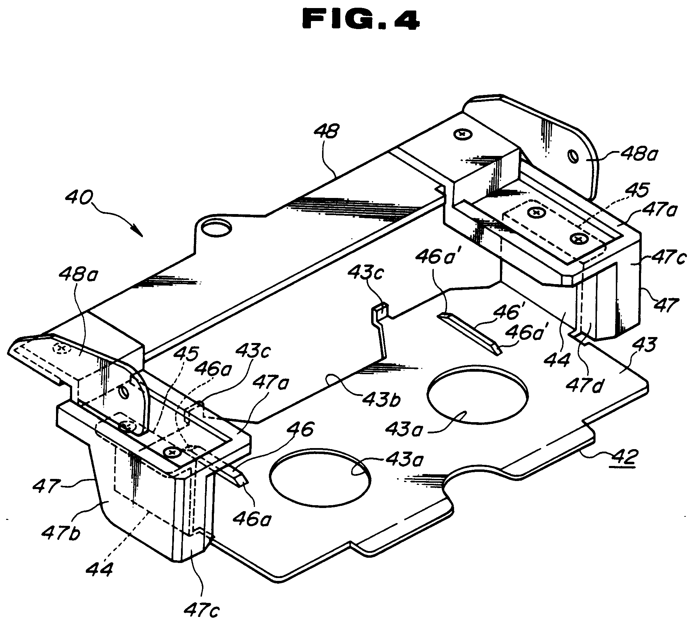

Referring to Figures 1 to 5, a tape player to record information on and reproduce it from a magnetic tape of a DAT cassette has a metallic support frame 28, on which a mechanical chassis 29 is supported. The mechanical chassis 29 is arranged in tilted fashion to tilt downwardly toward the front end at an angle of approximately 45° and is rigidly fixed on the support frame 28. A cassette receptacle space 30 into which the DAT cassette 2 is to be loaded is formed on the front half of the mechanical chassis 29. Three positioning pins 31 project from the mechanical chassis 29 to position the DAT cassette in the cassette receptacle space 30. A pair of reel bases 32 is also provided in the cassette receptacle space 30.

A rotary head drum 33, a capstan 34, a stationary tape guide 35, a pinch roller 36 and tape guide blocks 37 to wrap the tape around the rotary head drum are provided on the mechanical chassis 29 in per se known manner to drive tape across the rotary head drum to record information thereon and reproduce it therefrom. In the illustrated embodiment, the information to be recorded on the tape of the DAT cassette 2 is a pulse-code-modulated (PCM) audio signal.

The tape player has a front panel 38 defining therethrough a cassette receptacle opening 38a with a closure lid 39.

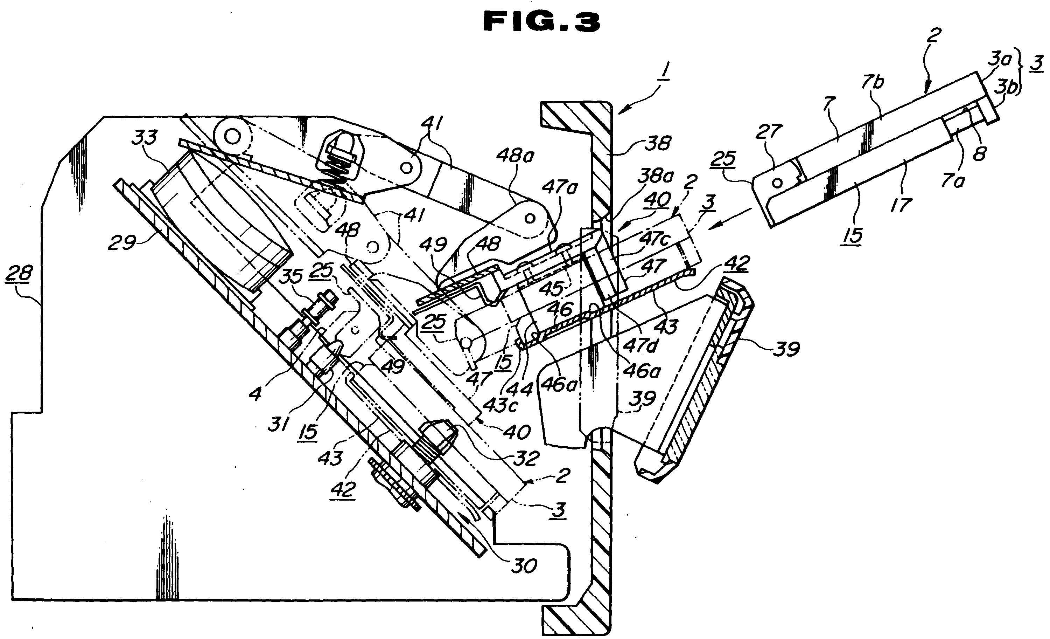

A cassette holder 40 is provided in the tape player to position the DAT cassette 2 at a loading position or an eject position. The cassette holder 40 is connected to one end of pivotal arms 41 at its front end, which pivotal arms 41 are pivotally connected to the support frame 28 for pivotal movement thereabout. At the eject position, the cassette holder 40 projects outwardly through the cassette receptacle opening 38a of the front panel so that the DAT cassette 2 can be set thereinto or removed therefrom, as shown by solid lines in Figure 3. On the other hand, at the loading position, the DAT cassette 2 is placed within the cassette receptacle space 30 with its tape reels engaged with the reel bases 32, as shown by dotted lines in Figure 3.

The cassette holder 40 has a major section 42 in which the DAT cassette is set, a pair of guide members 47 provided at respective transverse sides of the major section, and an upper plate 48 extending over the upper ends of the guides 47. The major section 42 has a bottom plate 43 which is formed to a generally rectangular plate shaped configuration having a size slightly greater than the sliding shutter 15 of the DAT cassette 2. A pair of side plates 44 extend upwardly from the rear transverse edges of the bottom plate 43. The side plates 44 are respectively bent horizontally to form mounting sections 45. The bottom plate 43 is formed with a circular opening 43a. The bottom plate 43 is also formed with a generally trapezoidal shape cut-out 43b with generally L-shaped extension pieces 43c extending from the rear edge thereof.

The bottom plate 43 is further formed with a pair of elongate projections 46 and 46′ projecting from the upper surface thereof. These projections 46 and 46′ serve to release locking engagement of the locking heads 12 and 12′ and the locking holes 20a, 20a' or 20b, 20b'.

In the following discussion, the projections 46 and 46′ will be referred to as "lock releasing projections". As can be seen, the lock releasing projections respectively have tapered front and rear ends 46a and 46a'. The lock releasing projections 46 and 46′ have a height corresponding to or slightly smaller than the depth of the locking grooves 19 and 19′ and have a length slightly shorter than the length of the locking grooves 19 and 19′. As can be seen from Figure 1, the width of the lock releasing projections 46 and 46′ are different one from the other. Particularly, as can be seen from Figure 1, the width $W_1$ of the lock releasing projection 46 essentially corresponds to or is slightly smaller than the width $W_0$ of the locking groove 19. On the other hand, the width $W_2$ of the lock releasing projection 46′ is smaller than the width $W_0$ of the locking groove 19′. Practically the width $W_2$ is half of the width $W_0$ of the locking groove 19′. In the practical embodiments, respective widths of the locking grooves 19 and 19′ and of the lock releasing projections 46 and 46′ are as follows:

$$W_0 = 2.0 \text{ mm (tolerance } +0.5 \text{ mm, -0 mm)}$$

$$W_1 = 1.9 \text{ mm (tolerance } +0 \text{ mm, -0.1 mm) and}$$

$$W_2 = 1.0 \text{ mm (tolerance } \pm 0.1 \text{ mm)}$$

Each of the guide members 47 has an upper plate 47a of essentially rectangular configuration, a side plate 47b and a front plate 47c. The guide members 47 are formed of a synthetic resin. The upper plates 47a are secured onto the mounting section 45 of the major section 42 by means of fastening screws. The front plates 47c have inner peripheral surfaces 47d lying substantially flush with the inner peripheral surface of the side walls 44.

The inner plate 48 is formed of elongate strip form with its transverse ends fixed onto the upper plates 47a of the guide members 47. The upper plate 48 has a vertical extension 48a extending from each transverse end thereof. To the vertical extensions 48a, the pivotal arms 41 are connected. A bias spring 49 is supported on the lower surface of the upper plate 48 downwardly to depress the DAT cassette 2 inserted into the cassette holder.

The cassette holder 40 thus constructed defines a transversely elongate space defined by the bottom plate 42, the side plates 44 and the guide members 47, and the upper plate 48. The cassette holder 40 can receive a DAT cassette 2 in this space.

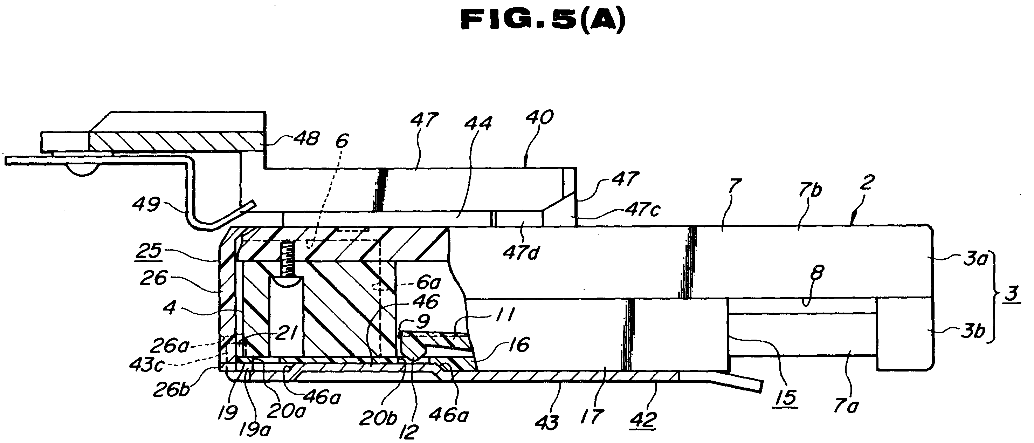

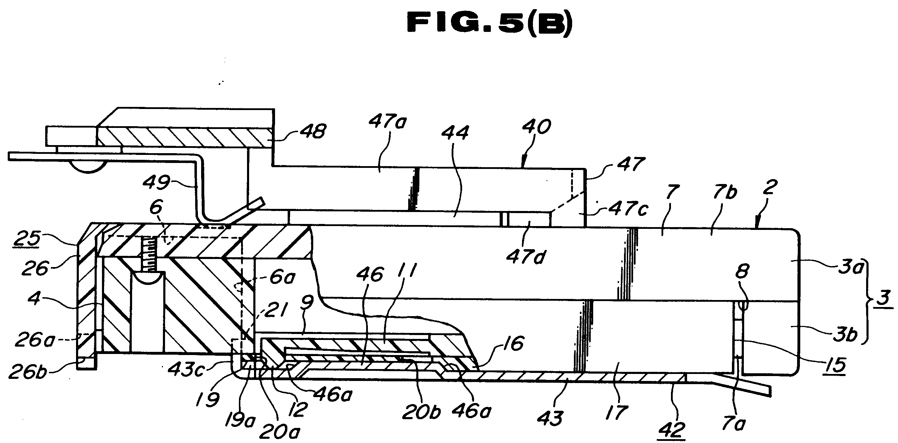

Upon insertion of the DAT cassette 2 into the cassette holder, the cassette is inserted as shown in Figure 3. The lock releasing projections 46 and 46′ enter the associated locking grooves 19 and 19′ and the locking heads 12 of the locking claws 11 come into contact with the upper edge of the lock releasing projections 46 and 46′ and are thereby shifted upwardly. As a result, the locking heads 12 lie flush with the bottom surface of the locking grooves 19 and 19′. Since the front and rear ends of the locking heads 12 are tapered or rounded, locking engagement between the locking head and the locking openings 20b and 20b' can be released by rearward movement of the sliding shutter 15, as shown in Figure 5(A). Slightly after releasing of locking engagement between the locking head and the locking openings 20b and 20b', the projections 21 come into contact with the extension pieces 43c of the bottom plate 43. The sliding shutter 15 is thus prevented from shifting further relative to the bottom plate of the cassette holder but the cassette 2 travels further inwardly leaving the sliding shutter 15 at the position where the contact between the projection 21 and the extension pieces 43c was established, as shown in Figure 5. After a predetermined stroke of travel essentially corresponding to the length of the locking grooves 19 and 19′, the locking heads 12 come into engagement with the locking holes 20a and 20′. Therefore, the sliding shutter 15 is restricted from further movement.

At this position, the lock releasing projections 46 and 46′ are maintained in engagement with the locking grooves 19 and 19′ for cooperation therewith so as to restrict play movement of the DAT cassette 2 relative to the cassette holder 40 and thus accurately position the cassette within the cassette holder. To ensure engagement of the lock releasing projections 46 and 46′ and the locking grooves 19 and 19′, the narrower width of the lock releasing projection 46′ serves to permit slight offset of the cassette in transverse directions and thus absorb tolerance. Thus, in the illustrated construction, the lock releasing projection 46 having a configuration and size essentially in conformance with that of the locking groove 19 serves to determine the transverse position of the cassette 2 relative to the cassette holder. Production tolerance can however be absorbed by clearance defined between the lock releasing projection 46′ and the locking groove 19′. At the set position, the DAT cassette 2 is depressed toward the bottom plate 43 by the bias spring 49 and the cassette 2 will be firmly maintained within the cassette holder.

Thereafter, the cassette holder 40 is shifted to the loading position, the cassette holder carrying the DAT cassette is placed within the cassette receptacle space 30 on the mechanical chassis and the pivotal lid 25 is pivotally shifted to the open position. The tape in the DAT cassette is then accessible for recording and reproducing information thereon.

When the DAT cassette 2 is to be ejected, the cassette holder 40 is shifted away from the mechanical chassis to the eject position where the cassette holder 40 is externally accessible. During this movement of the cassette holder 40, the pivotal lid 25 is moved into the closed position. At this position, the DAT cassette 2 is pulled out from the cassette holder by pulling the cassette along the surface of the bottom plate of the cassette holder.

By outward movement, the lock releasing projections 46 and 46′ again come into contact with the locking heads 12 which are in locking engagement with the locking holes 20a and 20a' to depress the latter upwardly. As a result, the sliding shutter 15 becomes free from restriction in sliding movement. Therefore, the sliding shutter 15 is shifted forwardly by the spring force of the coil spring 24. At the initial, closed position, the locking heads 12 come into engagement with the locking holes 20b and 20b' of the sliding shutter 15 to restrict sliding movement.

As can be appreciated herefrom, the illustrated embodiment of the cassette holder can position a cassette therewithin without requiring any extra means for positioning the cassette.

Although the illustrated embodiment specifically concerns a cassette holder for a DAT player, the invention is applicable to tape players for recording and reproducing information in tape cassettes of other kinds. Particularly the cassette holder may handle tape cassettes having sliding shutter locking structures as disclosed in Patent Specifications US-A-4,843,510; EP-A-0 180 759; GB-A-2,165,819; and US-A-4,714,213, the disclosure of which is herein incorporated by reference. Furthermore, the invention is applicable to cassette holders as disclosed in Patent Specifications US-A-4,881,137; US-A-4,673,145; US-A-4,799,117; and US-A-4,935,895, the disclosure of which is herein incorporated by reference.

## Claims

1. A tape cassette player (1) having a cassette holder (40) containing a cassette having a recording medium tape housed in a cassette casing (3), on which tape information can be recorded and from which tape information can be reproduced, the cassette casing (3) having a sliding shutter (15) openable to close a tape access opening defined at the lower side of the cassette casing (3),

   wherein the cassette holder (40) defines therein a tape cassette receptacle space (30), the cassette holder having a bottom plate (43) forming the bottom of the cassette receptacle space (30); and
   the cassette holder (40) has two projections (46, 46′) projecting from the bottom plate of the cassette holder (40) and oriented in mutually spaced apart relationship to each other, the projections (46, 46′) being engageable each with a respective groove of two grooves (19, 19′) in the sliding shutter (15), into which grooves (19, 19′) project locking heads (12) for locking the sliding shutter (15) at an open position or a closed position,
   characterised in that one (46, 19) of the pairs formed by one (46) of the projections and one (19) of the grooves are differentiated in width from the other (46′, 19′) of the pairs in such a manner that said one (19) of the grooves and that one (46) of the projections engaging therein are substantially in width conformance with each other while the other of the pairs formed by the other (19′) groove, and the other projection (46′) has the other projection (46') provided of narrower width (W$_2$) than the width (W$_0$) of the other groove (19') such that they are engaged with each other only loosely.

2. A tape cassette according to claim 1, wherein the width (W$_2$) of the other projection (46′) is approximately half of the width (W$_0$) of the other groove (19).

**Patentansprüche**

1. Bandkassettenspieler (1) mit einem Kassettenhalter (40) für eine Kassette, bei der in einem Kassettengehäuse (3) ein bandförmiges Aufzeichnungsmedium angebracht ist, auf dem Informationen aufgezeichnet und von dem Informationen wiedergegeben werden können, wobei das Kassettengehäuse (3) einen verschiebbaren Verschluß (15) aufweist, der betätigt werden kann, um eine an der Unterseite des Kassettengehäuses (3) gebildete Bandzugangsöffnung zu schließen,

wobei in dem Kassettenhalter (40) ein Kassettenaufnahmeraum (30) gebildet ist und der Kassettenhalter eine Basisplatte (43) aufweist, die den Boden des Kassettenaufnahmeraums (30) bildet, und
der Kassettenhalter (40) zwei Vorsprünge (46, 46') aufweist, die von der Basisplatte des Kassettenhalters (40) nach oben ragen und in einem bestimmten Abstand angeordnet und ausgerichtet sind, wobei die Vorsprünge (46, 46') jeweils mit einer von zwei im verschiebbaren Verschluß (15) gebildeten Nuten (19 bzw. 19') in Eingriff gebracht werden können und in die Nuten (19, 19') Arretiervorsprünge (12) zum Arretieren des verschiebbaren Verschlusses (15) in Öffnungsstellung oder Schließstellung ragen,
dadurch gekennzeichnet,
daß eine (46, 19) der aus einem (46) der Vorsprünge und einer (19) der Nuten gebildeten Paarungen sich in der Breite von der anderen (46', 19') der Paarungen so unterscheidet, daß eine (19) der Nuten und einer (46) der darin eingreifenden Vorsprünge im wesentlichen gleich breit sind und bei der anderen der aus der anderen Nut (19') und dem anderen Vorsprung (46') gebildeten Paarungen die Breite (W$_2$) des Vorsprungs (46') geringer ist als die Breite (W$_0$) der Nut (19'), so daß sie nur locker in Eingriff gelangen.

2. Bandkassettenspieler nach Anspruch 1, bei dem die Breite (W$_2$) des Vorsprungs (46') etwa die Hälfte der Breite (W$_0$) der Nut (19') beträgt.

**Revendications**

1. Lecteur de cassette de bande (1) ayant un porte-cassette (40) qui contient une cassette ayant une bande de milieu d'enregistrement logée dans un boîtier de cassette (3), sur laquelle bande de l'information peut être enregistrée et à partir de laquelle bande l'information peut être reproduite, le boîtier de cassette (3) possédant un obturateur coulissant ouvrant (15) servant à fermer une ouverture d'accès à la bande définie dans le côté inférieur du boîtier de cassette (3),

dans lequel le porte-cassette (40) définit intérieurement un espace (30) de réception de cassette de bande, le porte-cassette ayant une plaque de fond (43) formant le fond de l'espace de réception de cassette (30) ; et
le porte-cassette (40) possède deux saillies (46, 46') qui font saillie sur la plaque de fond du porte-cassette (40) et sont orientées dans des positions relatives mutuellement espacées l'une de l'autre, les saillies (46, 46') pouvant être mises en prise chacune avec une rainure respective de deux rainures (19, 19') ménagées dans l'obturateur coulissant (15), rainures (19, 19') dans lesquelles sont engagées des têtes de verrouillage (12) servant à verrouiller l'obturateur coulissant (16) dans une position ouverte ou dans une position fermée,
caractérisé en ce qu'une (46, 19) des paires formées par une (46) des saillies et une (19) des rainures diffère en largeur de l'autre (46', 19') des paires de telle manière que ladite une (19) des rainures et une (46) des saillies qui y est engagée sont sensiblement en concordance de largeur entre elles, tandis que l'autre des paires, formée par l'autre rainure (19') et l'autre saillie (46') a cette autre saillie (46') dotée d'une largeur (W$_2$) plus petite que la largeur (W$_0$) de l'autre rainure (19'), de sorte qu'elles ne sont en prise entre elles que de façon lâche.

2. Cassette de bande selon la revendication 1, dans laquelle la largeur (W$_2$) de l'autre saillie (46') est à peu près la moitié de la largeur (W$_0$) de l'autre rainure (19).

# FIG.1

# FIG.2

EP 0 419 195 B1

# FIG.3

EP 0 419 195 B1

# FIG.4

# FIG.5(A)

EP 0 419 195 B1

# FIG.5(B)

**FIG.6**

# FIG.7

FIG.8